# EUROPÄISCHE PATENTSCHRIFT

(11) **EP 0 948 890 B1**
(45) Veröffentlichungstag und Bekanntmachung des Hinweises auf die Patenterteilung: **01.08.2001**
(21) Anmeldenummer: 99105987.4
(22) Anmeldetag: 25.03.1999
(51) Int. Cl.: A01K 97/08

(54) **Einrichtung zum Zusammenhalten von Abschnitten von mehrteiligen oder teleskopierbaren Angelruten**
Device for retaining together differents sections of a rod or a telescopic rod
Dispositif pour maintenir ensemble les brins d'une canne à pêche ou d'une canne télescopique

(30) Priorität: 02.04.1998 AT 21998 U
(43) Veröffentlichungstag der Anmeldung: 13.10.1999
(73) Patentinhaber: Oberscheider, Markus, 6890 Lustenau (AT)
(72) Erfinder: Kamaun, Michael, A-6900 Bregenz (AT)
(74) Vertreter: Hefel, Herbert, Dipl.-Ing.

(56) Entgegenhaltungen:
- DE-U- 29 805 536
- US-A- 4 261 129

## Beschreibung

Die Erfindung bezieht sich auf eine Einrichtung zum Zusammenhalten von Abschnitten von mehrteiligen oder teleskopierbaren Angelruten mit den Merkmalen des Oberbegriffes des Patentanspruches 1.

Angelruten, die teleskopierbar sind bzw. die aus mehreren auseinandemehmbaren Teilen bestehen, sind in vielen Formen bekannt (Katalog "BALZER - Angelgeräte, die begeistern '97", Seite 19 bis 59; Katalog "Askari - Angelsport 1997", Seite 24 - 59). Bei Nichtgebrauch werden die teleskopierbaren Angelruten zusammengeschoben und so in ihrer Länge verkürzt. Die mehrteiligen Angelruten werden in ihre einzelnen Teile zerlegt, und diese Teile werden bündelmäßig zusammengefaßt. Bei der teleskopierbaren Angelrute liegen, wenn sie zusammengeschoben und somit verkürzt ist, die an den jeweiligen Enden der einzelnen Abschnitte der Angelrute vorgesehenen Führungsringe für die Angelschnur unmittelbar nebeneinander.

Um diese Abschnitte zusammenzuhalten und um die endseitig an der Angelrute befindliche Durchlauföse für die Angelschnur vor mechanischen Einflüssen zu schützen, wurde bereits eine vergleichbare Einrichtung vorgeschlagen, die in der US 4 261 129 A gezeigt und beschrieben ist. Diese vorbekannte Einrichtung ist aus elastischem Kunststoff gefertigt. Nahe dem offenen Ende dieser Einrichtung ist eine Verschlußlasche angeformt mit mehreren in einer Reihe liegenden Öffnungen. In derselben Querschnittsebene der Einrichtung, jedoch auf der Seite des rinnenartigen Ansatzes, der dem Befestigungspunkt der Verschlußlasche gegenüberliegt, ist ein Aufsteckdorn angeformt, auf den die Verschlußlasche aufsteckbar ist. Um diese vorbekannte Einrichtung bestimmungsgemäß zu verwenden, sind zwangsweise beide Hände erforderlich, mit der einen Hand wird die Einrichtung festgehalten, mit der anderen Hand wird die Verschlußlasche über den rinnenartigen Ansatz gelegt und mit dem Aufsteckdorn verbunden.

Ausgehend von diesem Stand der Technik hat sich die Erfindung zur Aufgabe gestellt, eine Einrichtung der erwähnten Art so weiter zu entwickeln, daß für ihren bestimmungsgemäßen Einsatz nur eine Hand erforderlich ist, was erfindungsgemäß durch jene Maßnahmen gelingt, die Inhalt und Gegenstand des kennzeichnenden Teiles des Patentanspruches 1 sind. Zweckmäßige Ausgestaltungen der Erfindung sind in den Unteransprüchen festgehalten.

Die Zeichnung veranschaulicht eine Ausführungsform der Erfindung. Es zeigen:

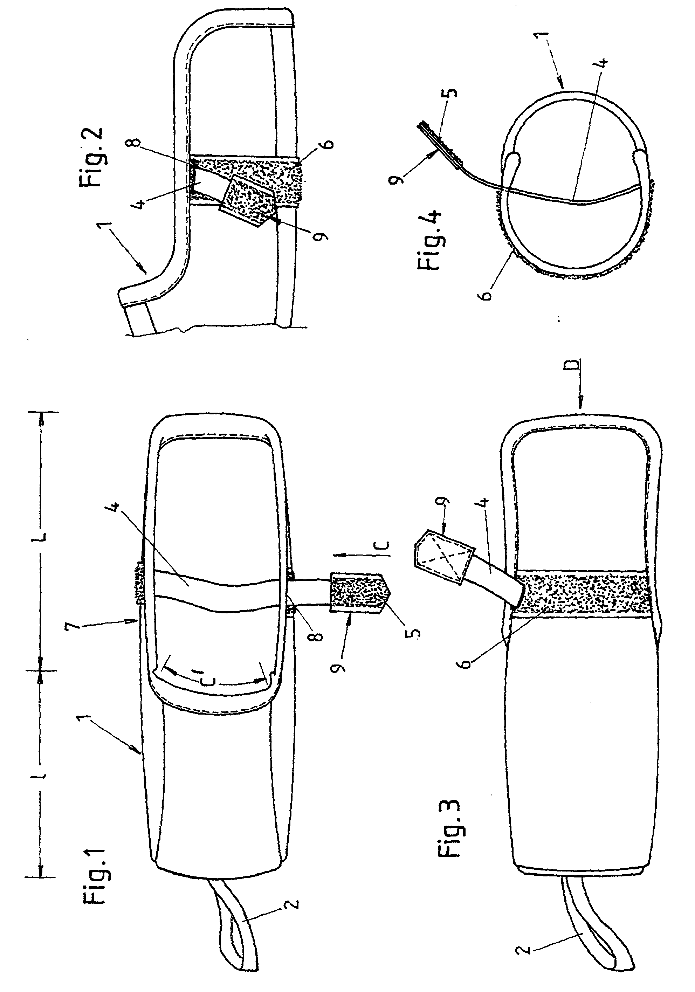

- Fig. 1: die Draufsicht;
- Fig. 2: deren Seitensicht - Blickrichtung Pfeil C in Fig. 1;
- Fig. 3: deren Untersicht und
- Fig. 4: deren Stimansicht - Blickrichtung Pfeil D in Fig. 3.

Das Ausführungsbeispiel ist für teleskopierbare Angelruten vorgesehen. Es ist aus einem gegebenenfalls gefütterten, tuchartigen Material gefertigt und als sackartige Kappe 1 ausgebildet, an deren geschlossenem Ende eine Aufhängeöse 2 festgelegt ist. Die sackartige Kappe 1 besitzt einen seitlich längs verlaufenden Ausschnitt, durch den ein rinnenartiger Bereich bzw. Ansatz 7 gebildet ist. Die achsiale Länge L dieses rinnenartigen Ansatzes 7 kann dabei zweckmäßigerweise etwas größer sein als die Länge l des umfangsgeschlossenen Abschnittes der Kappe 1. Im Längsmittelbereich des rinnenartigen Ansatzes 7 ist ein vorzugsweise elastisches Band 4 mit seinem einen Ende an dieser Kappe 1 festgelegt. Es ist an der Außenseite der sackartigen Kappe angenäht oder angeklebt. Das freie Ende des vorzugsweise elastischen Bandes 4 ist durch eine schlitzartige Öffnung 8 hindurchgezogen, die sich am Rande des rinnenartigen Ansatzes 7 befindet. Um zu vermeiden, daß dieses vorzugsweise elastische Band 4 aus dieser Öffnung 8 schlüpft bzw. unbeabsichtigterweise herausgezogen wird, ist das freie Ende dieses Bandes 4 mit einer Grifflasche 9 ausgestattet, die breiter ist als die schlitzförmige Öffnung 8. An der Außenseite der sackartigen Kappe ist der Teil 6 eines Klettverschlusses befestigt, der sich über den äußeren Umfang dieses rinnenartigen Ansatzes 7 erstreckt. Der andere Teil 5 des Klettverschlusses ist mit der Grifflasche 9 verbunden. Der obere Abschnitt C', der den rinnenartigen Ansatz 7 einseitig begrenzt, ist zweckmäßigerweise als Gummizug gestaltet.

Die Länge dieser sackartigen Kappe 1 beträgt circa 160 mm, dieses Maß kann nach oben oder nach unten abweichen.

Die hier gezeigte und vorgeschlagene Führung des Bandes 4 durch die schlitzartige Öffnung 8 im rinnenartigen Ansatz 7 erleichtert die Handhabung der Einrichtung. Ist eine teleskopierbare Angelrute bzw. sind deren Teile zusammengeschoben und die Angelrute somit verkürzt, so liegen die endseitigen, an den einzelnen Abschnitten angeordneten Ringe für die Führung der Angelschnur unmittelbar nebeneinander. Die Kappe 1 wird auf das freie Ende der verkürzten Angelrute aufgestülpt, wobei die ersten kleinen Ringe vom umfangsgeschlossenen Abschnitt der Kappe 1 aufgenommen werden, wogegen die größeren Ringe im Bereich des rinnenartigen Abschnittes 7 liegen. Mit dem elastischen Band 4 und dessen Verschluß wird die Kappe 1 am Ende der Angelrute gesichert, in dem dieses Band 4 um die Angelrute herumgeschlungen und festgelegt wird, wobei dies mit einer Hand geschehen kann. Die vorgesehene Einrichtung wird auch zweckmäßigerweise bei solchen Angelruten verwendet, die mehrteilig ausgebildet sind, wobei diese Teile zusammensteckbar sind.

### Legende zu den Hinweisziffern:

- 1: Kappe
- 2: Aufhängeöse
- 3 4: Band
- 5: Teil - Klettverschluß
- 6: Teil - Klettverschluß
- 7: rinnenartiger Ansatz
- 8: schlitzartige Öffnung
- 9: Grifflasche

## Patentansprüche

1. Einrichtung zum Zusammenhalten von Abschnitten von mehrteiligen oder teleskopierbaren Angelruten, bestehend aus einer auf die freien Enden der bündelmäßig zusammengefügten Abschnitte der zerlegten mehrteiligen Angelrute oder auf das freie Ende der zusammengeschobenen teleskopierbaren Angelrute aufsteckbaren Kappe (1), an der das eine Ende eines Bandes (4), und zwar an der dem verschlossenen Abschnitt der Kappe (1) abgewandten Seite, festgelegt ist und das freie Ende des Bandes (4) ein Verschlußglied (5) trägt, das mit einem an der Außenseite der Kappe (1) angeordneten zweiten Verschlußglied (6) zusammenwirkt und das Band (4) um die Kappe herumschlingbar ist, wobei die Kappe (1) einen seitlichen, längsverlaufenden Ausschnitt aufweist und die Kappe (1) durch diesen seitlichen Ausschnitt einen rinnenartigen Bereich (7) besitzt, dadurch gekennzeichnet, daß das mit seinem einen Ende an einem Rand des rinnenartigen Bereichs (7) festgelegte Band (4) durch eine schlitzartige, randseitige Öffnung (8) am Rand des rinnenartigen Bereichs (7) hindurchgezogen ist und dabei den rinnenartigen Bereich (7) überbrückt und das freie Ende des Bandes (4) durch eine Grifflasche (9) verbreitert ist, wobei die Verschlußglieder (5, 6) Teil eines Klettverschlusses sind.

2. Einrichtung nach Anspruch 1, dadurch gekennzeichnet, daß die Grifflasche (9) als Teil (5) des Klettverschlusses ausgebildet ist.

3. Einrichtung nach Anspruch 1, dadurch gekennzeichnet, daß der eine Teil (6) des Klettverschlusses, der am rinnenartigen Bereich (7) vorgesehen ist, sich über dessen äußeren Umfang erstreckt.

4. Einrichtung nach Anspruch 1, dadurch gekennzeichnet, daß das Band (4) gummielastisch ausgebildet ist.

5. Einrichtung nach Anspruch 1, dadurch gekennzeichnet, daß sie aus tuchartigem oder folienartigem, gegebenenfalls gefüttertem Material gefertigt und sackartig ausgebildet ist.

6. Einrichtung nach Anspruch 1, dadurch gekennzeichnet, daß die axiale Länge (L) des rinnenartigen Bereichs (7) in an sich bekannter Weise gleich, vorzugsweise jedoch größer ist als die Länge (I) des umfangsgeschlossenen Abschnittes der Kappe (1).

7. Einrichtung nach Anspruch 1, dadurch gekennzeichnet daß das Band (4) etwa im Längsmittelbereich des rinnenartigen Bereichs (7) liegt.

## Claims

1. A device for holding together portions of multi-part or telescopic fishing rods, comprising a cap (1) pushable onto the free ends of the bundled portions of the dismantled multi-part fishing rod or onto the free end of the telescoped fishing rod, one end of a band (4) being fixed to the cap (1) on the side remote from the closed portion of the cap (1), the free end of the band (4) carrying a fastening element (5) co-operating with a second fastening element (6) arranged on the outside of the cap (1), and the band (4) being loopable around the cap, wherein the cap (1) has a lateral, longitudinally extending cutout and, owing to this lateral cutout, has a channel-type region (7), characterised in that the band (4), fixed at one end to an edge of the channel-type region (7), is drawn through a slot-type peripheral opening (8) at the edge thereof and thus bridges the channel-type region (7), and the free end of the band (4) is widened by a holding tab (9), the fastening elements (5, 6) being part of a hook-and-loop fastener.

2. A device according to claim 1, characterised in that the holding tab (9) is formed as part (5) of the hook-and-loop fastener.

3. A device according to claim 1, characterised in that part (6) of the hook-and-loop fastener, provided on the channel-type region (7), extends over the outer circumference thereof.

4. A device according to claim 1, characterised in that the band (4) is resiliently formed.

5. A device according to claim 1, characterised in that it is made from cloth-type or sheeting-type, optionally lined material and is in the form of a pouch.

6. A device according to claim 1, characterised in that, in a known manner, the axial length (L) of the channel-type region (7) is equal to, but preferably greater than the length (1) of the circumferentially closed portion of the cap (1).

7. A device according to claim 1, characterised in that the band (4) is arranged approximately in the longitudinal central region of the channel-type region (7).

## Revendications

1. Dispositif pour maintenir ensemble des brins de cannes à plusieurs parties ou télescopiques, constitué d'un chapeau (1) qui peut être emboîté sur les extrémités libres des brins assemblés en faisceaux des cannes fractionnées en plusieurs parties ou sur l'extrémité libre de la canne télescopique emboîtée, chapeau sur lequel la première extrémité d'un ruban (4) est fixée du côté opposé à la section fermée du chapeau (1), et l'extrémité libre du ruban (4) porte un élément de fermeture (5) qui coopère avec un second élément de fermeture (6) agencé sur le côté externe du chapeau (1) et le ruban (4) est enroulé autour du chapeau, le chapeau (1) présentant une découpe latérale allongée et le chapeau (1) possédant une zone en forme de rigole (7) s'étendant à travers cette découpe latérale, caractérisé en ce que le ruban (4) fixé par sa première extrémité sur un bord de la zone en forme de rigole (7) est tiré à travers une ouverture (8) en forme de fente et située sur le bord de la zone en forme de rigole (7) et recouvre la zone en forme de rigole (7), et l'extrémité libre du ruban (4) est élargie par une patte de préhension (9), les éléments de fermeture (5, 6) faisant partie d'une fermeture de type Velcro.

2. Dispositif selon la revendication 1, caractérisé en ce que la patte de préhension (9) est conformée en partie (5) de la fermeture de type Velcro.

3. Dispositif selon la revendication 1, caractérisé en ce que la première partie (6) de la fermeture de type Velcro, qui est prévue dans la zone en forme de rigole (7), s'étend sur toute sa périphérie externe.

4. Dispositif selon la revendication 1, caractérisé en ce que le ruban (4) a une élasticité analogue à celle du caoutchouc.

5. Dispositif selon la revendication 1, caractérisé en ce qu'il est constitué d'un matériau de type étoffe ou film, éventuellement revêtu, et se présente sous la forme d'un sac.

6. Dispositif selon la revendication 1, caractérisé en ce que la longueur axiale (L) de la zone en forme de rigole (7) est de manière connue en soi égale, mais de préférence supérieure à la longueur (1) de la section du chapeau (1) fermée sur la périphérie.

7. Dispositif selon la revendication 1, caractérisé en ce que le ruban (4) se situe plus ou moins dans la zone longitudinale moyenne de la zone en forme de rigole (7).
